# EUROPEAN PATENT APPLICATION

(11) **EP 3 835 005 A1**
(43) Date of publication of application: **16.06.2021**
(21) Application number: 18929337.6
(22) Date of filing: 09.08.2018
(51) Int. Cl.: B25J 9/22

(54) **SIMULATION METHOD AND SIMULATION SYSTEM**

(71) Applicant: Fuji Corporation, Chiryu-shi, Aichi 472-8686 (JP)
(72) Inventor: HIGASHIDA, Akihiro, Chiryu-shi, Aichi 472-8686 (JP); KODAMA, Seigo, Chiryu-shi, Aichi 472-8686 (JP); FUJITA, Masatoshi, Chiryu-shi, Aichi 472-8686 (JP)
(74) Representative: Grünecker Patent- und Rechtsanwälte PartG mbB
(86) International application number: PCT/JP2018/029942
(87) International publication number: WO 2020/031333

(57) **Abstract**

There is provided a simulation method for executing a simulation of a work system composed of multiple modules using a computer, the simulation method including: an acquisition step of acquiring module data in which various data including data relating to shapes of the multiple modules are grouped for each module; a structuring step of structuring a model of the work system in a virtual space by integrating the module data acquired in the acquisition step; and an execution step of executing the simulation using the model structured in the structuring step.

## Description

### Technical Field

The present specification discloses a simulation method and a simulation system.

### Background Art

In the related art, a simulation method for simulating an operation of a robot or the like having a robot hand for gripping a workpiece has been disclosed (see, for example, Patent Literature 1). In Patent Literature 1, a shape model that models shapes of the workpiece, the robot hand, the robot, the surrounding environment, and the like, positional information indicating their positional relationship, an operation model of the robot, and the like are incorporated, and the gripping possibility for each shape of the robot hand is calculated. Then, control parameters of the robot hand in gripping the workpiece, such as an operation speed and a stop time of the robot hand, are changed based on the calculated gripping possibility.

### Patent Literature

Patent Literature 1: JP-A-2015-100866

### Summary of the Invention

### Technical Problem

In the simulation method as described above, it may be necessary to perform processing for setting the shape model, the operation model, and the like in association with each other each time a simulation is executed. In that case, a long time of preparation work is required to execute the simulation, which makes the preparation work cumbersome.

The present disclosure is primarily intended to simplify a preparation work for a simulation and to execute the simulation efficiently.

### Solution to Problem

The present disclosure has taken the following means to achieve the main object described above.

A simulation method of the present disclosure is a simulation method for executing a simulation of a work system composed of multiple modules using a computer, the simulation method including: an acquisition step of acquiring module data in which various data including data relating to shapes of the multiple modules are grouped for each module; a structuring step of structuring a model of the work system in a virtual space by integrating the module data acquired in the acquisition step; and an execution step of executing the simulation using the model structured in the structuring step.

The simulation method of the present disclosure acquires module data in which various data including data relating to shapes of multiple modules are grouped for each module, integrates the acquired module data to structure a model of a work system in a virtual space, and executes a simulation using the structured model. Thus, it possible to quickly start a simulation by acquiring module data and structuring a model, even without performing the work of collecting or grouping the data of each module each time the simulation is executed. Therefore, the preparation work for the simulation can be simplified and the simulation can be executed efficiently.

### Brief Description of Drawings

[Fig. 1] Fig. 1 is a configuration view showing an outline of a configuration of simulation system 10.
[Fig. 2] Fig. 2 is a configuration view showing an outline of a configuration of work system 50.
[Fig. 3] Fig. 3 is an explanatory diagram showing an example of module data 21 included in module DB 20.
[Fig. 4] Fig. 4 is an explanatory diagram showing an example of a configuration of module data 21E.
[Fig. 5] Fig. 5 is an explanatory diagram showing an image of a chuck type end effector.
[Fig. 6] Fig. 6 is an explanatory diagram showing an example of a configuration of module data 21L.
[Fig. 7] Fig. 7 is a flowchart showing an example of module data registration processing.
[Fig. 8] Fig. 8 is a flowchart showing an example of model structuring processing.
[Fig. 9] Fig. 9 is an explanatory diagram showing an example of model M to which each module data 21 is connected.
[Fig. 10] Fig. 10 is a flowchart showing an example of simulation execution processing.

### Description of Embodiments

Next, an embodiment of the present disclosure will be described with reference to the drawings.

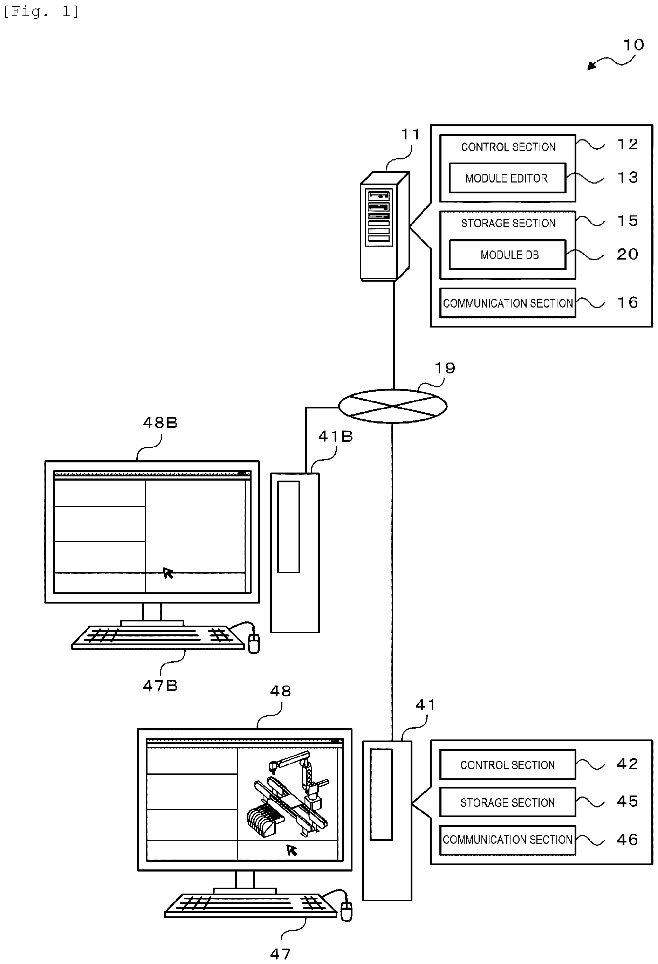

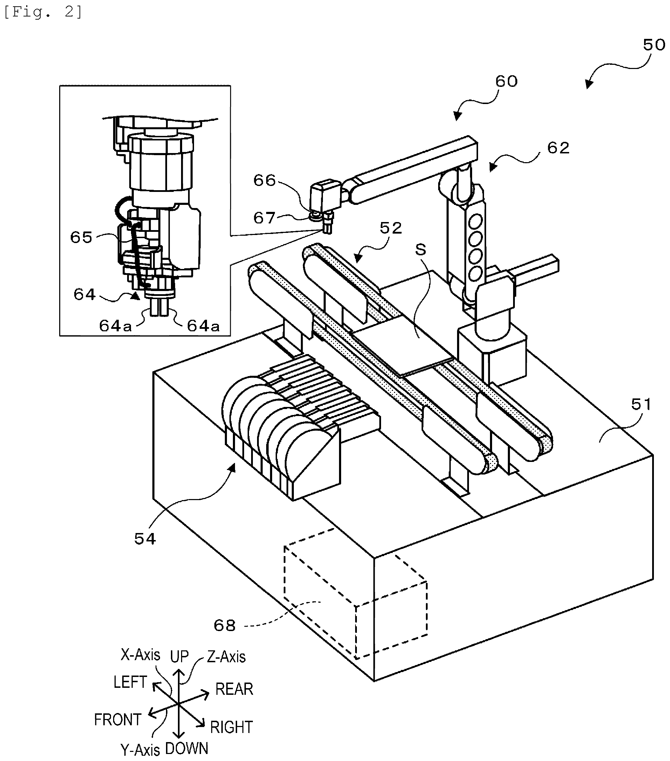

Fig. 1 is a configuration view showing an outline of a configuration of simulation system 10 of the present embodiment, and Fig. 2 is a configuration view showing an outline of a configuration of work system 50. In Fig. 2, the lateral direction is an X direction, the longitudinal direction is a Y direction, and the vertical direction is a Z direction.

Simulation system 10 includes cloud server 11 in which various data necessary for executing a simulation are registered, and multiple computers 41, 41B, ... connected to cloud server 11 via network 19 to execute various processing, such as a simulation of work system 50.

Here, work system 50 will be described. Work system 50 is configured as a system for performing a predetermined work by picking up a workpiece by the operation of robot 60 fixed to work table 51. Examples of the workpiece include various components such as mechanical components and electronic components. An example of the predetermined work includes a mounting work in which robot 60 places a workpiece on board S and mounts the workpiece.

Board conveyance device 52 for conveying board S, and feeder 54 for supplying components as a workpiece are disposed on work table 51. Board conveyance device 52 has a pair of belt conveyors which are bridged in the lateral direction (X-axis direction) at intervals in the longitudinal direction (Y-axis direction), and conveys board S from left to right by the belt conveyor. Feeder 54 is configured as a tape feeder for feeding a tape in which multiple workpieces are accommodated at predetermined intervals to the rear (Y-axis direction). Feeder 54 is not limited to a tape feeder, and may be a tray feeder or the like for supplying a tray on which multiple workpieces are arranged.

Robot 60 includes vertically articulated robot arm 62 in which multiple links are rotatably coupled via joints, and control device 68 for controlling the entire system including robot 60. Robot arm 62 is provided with a servo motor, an encoder for detecting a rotation angle, and the like, which are not shown, at each joint. An end effector as a work tool is detachably attached to the tip link of robot arm 62. Examples of the end effector can include an electromagnetic chuck, a mechanical chuck, and a suction nozzle, and those selected according to the shape and material of the workpiece are attached thereto. In the present embodiment, mechanical chuck having a pair of chuck claws 64a which can be opened and closed (hereinafter referred to as chuck) 64 is attached thereto. A pressure from a pressure supply source (not shown) is supplied to chuck 64 via a pipe (not shown) disposed along each link or pipe 65 shown in Fig. 2, and chuck claw 64a is opened and closed to grip and release the workpiece by using the pressure.

Further, camera 66 and light 67 are attached to the tip link of robot arm 62. Camera 66 includes an imaging element or the like for generating charges by lens and light receiving, and generates image data based on the charge of the image pickup device and output the image data to control device 68. Camera 66 captures an image for recognizing the position and the posture of the workpiece supplied by feeder 54, for example. Light 67 is a ring light in which light emission sources such as an LED are arranged in a ring shape, and is disposed coaxially with the lens of camera 66.

Control device 68 is composed of CPU, ROM, HDD, RAM, and the like, and stores a system program for managing the entire work system 50 and the like in addition to an operation program of robot 60. Further, although not shown, the operation program of board conveyance device 52 is stored in a programmable logic controller (PLC) of board conveyance device 52, and the operation program of feeder 54 is stored in a PLC of feeder 54. Detection signals from the encoder and the like of robot 60, image data from camera 66, operation signals from board conveyance device 52 and feeder 54, and the like are input to control device 68. Control device 68 outputs a control signal to chuck 64 as a servo motor or an end effector of robot 60, a control signal to camera 66 and light 67, a control signal to board conveyance device 52 and feeder 54, and the like. In the following description, board conveyance device 52 and feeder 54 constituting work system 50, robot 60 (robot arm 62), the end effector (chuck 64), camera 66, light 67, and the like each may be referred to as a module.

Simulation system 10 can execute a simulation for operating various work systems including work system 50 configured in this way in a virtual space. Cloud server 11 includes control section 12 having CPU, ROM, RAM, and the like, storage section 15 such as HDD that stores various application programs, various data, and the like, and communication section 16 that is connected to network 19 or the like and communicates with an external device such as computer 41. Control section 12 has module editor 13 and the like for generating module data 21 in which various data required for the simulation are grouped for each module. Storage section 15 has module database (module DB) 20 and the like in which multiple module data 21 are stored. Module data 21 includes not only the data of each module constituting the work system but also data of a workpiece which is a work target in the work system.

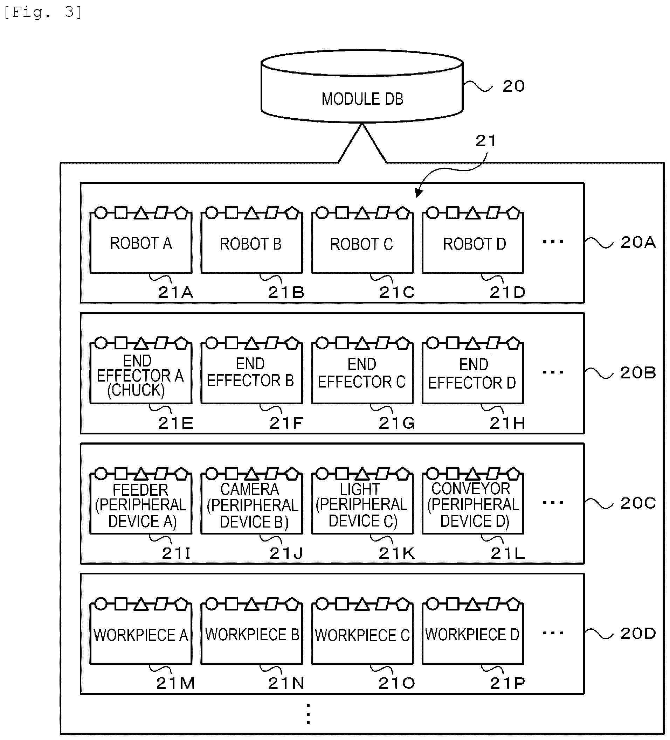

Here, module data 21 of cloud server 11 will be described. Fig. 3 is an explanatory diagram showing an example of module data 21 included in module DB 20. In module DB 20, multiple module data 21 are registered for each module type. For example, multiple module data 21 are registered based on the groupings of robot data 20A, end effector data 20B, peripheral device data 20C, and workpiece data 20D.

Module data 21A in which the data of robot arm 62 (also referred to as robot A) of work system 50 is grouped, module data 21B to 21D in which the data of various other robots (robots B to D, etc.) are grouped, and the like are registered in robot data 20A. The various robots may be of a horizontal articulated type, a parallel link type, or the like in addition to the vertical articulated type. Module data 21A includes three-dimensional CAD data (hereinafter referred to as "3D CAD data") relating to the shape of robot A, program data relating to an operation program for causing robot A to perform a predetermined work, and the like, and each data is referred to as configuration data. Similarly, module data 21B to 21D also include 3D CAD data of robots B to D and program data of robots B to D, respectively.

In addition, in end effector data 20B, module data 21E in which data of an end effector (chuck 64) detachably attached to robot A is grouped, module data 21F to 21H in which data of other types of end effectors detachably attached to robot A and respective types of end effectors detachably attached to robots B to D are grouped, and the like are registered. Further, in peripheral device data 20C, module data 211 in which data of feeder 54 (peripheral device A) is grouped, module data 21J in which data of camera 66 (peripheral device B) is grouped, module data 21K in which data of light 67 (peripheral device C) is grouped, module data 21L in which data of the conveyor (peripheral device D) as board conveyance device 53 is grouped, and the like are registered. Although not shown, in peripheral device data 20C, module data in which data of peripheral devices in a work system other than work system 50 are grouped is also registered. Further, in workpiece data 20D, module data 21M to 21 P in which data of various workpieces A to D which are work targets are grouped, respectively, and the like are registered.

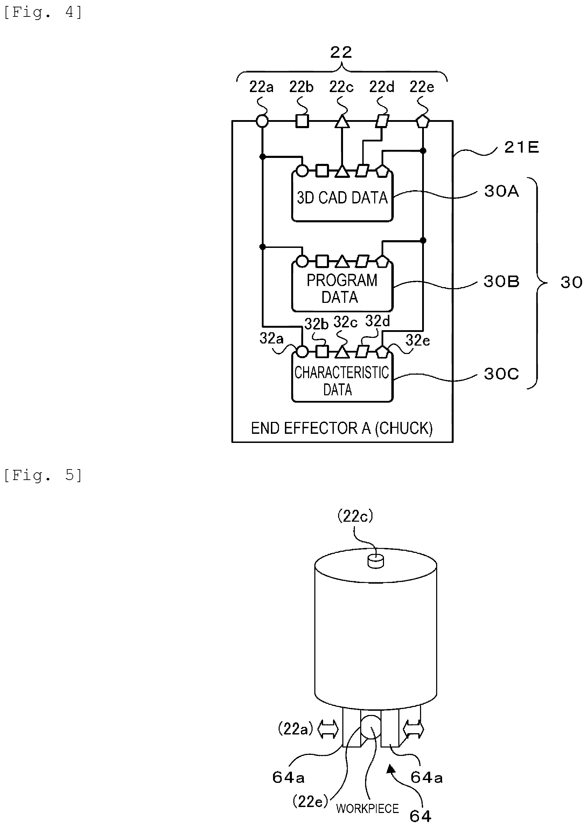

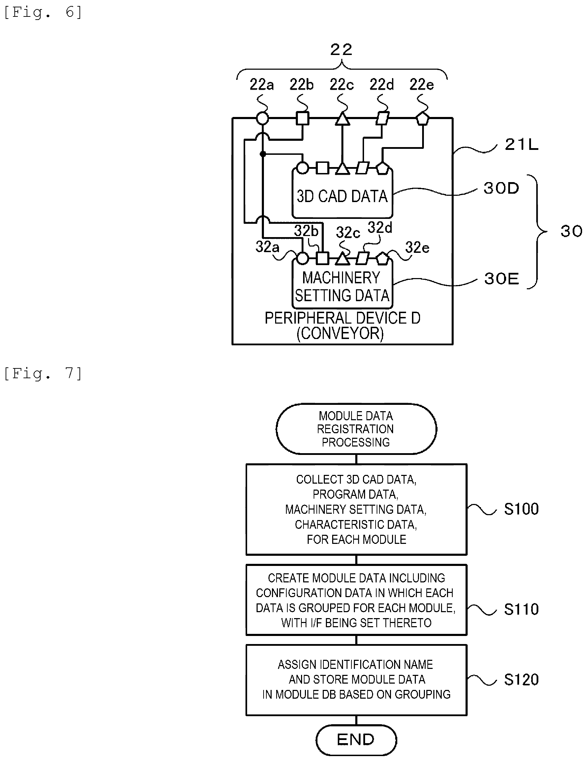

Here, Fig. 4 is an explanatory diagram showing an example of a configuration of module data 21E, Fig. 5 is an explanatory diagram showing an image of a chuck type end effector, and Fig. 6 is an explanatory diagram showing an example of a configuration of module data 21L. As shown in Fig. 4, module data 21E of chuck 64 includes 3D CAD data 30A relating to the shape and dimensions of chuck 64, program data 30B relating to the operation program such as a cycle diagram in the opening and closing operation of chuck 64, and characteristic data 30C relating to the characteristics of chuck 64. As shown in Fig. 5, in 3D CAD data 30A, data whose shape is simplified so that the maximum outer shape (dimensions) can be grasped while deleting the configuration unnecessary for a simulation, such as pipe 65 (see Fig. 2) of chuck 64, is registered. Further, in characteristic data 30C, the area and friction coefficient of the gripping surface of the workpiece in claw 64a of chuck 64, the material of claw 64a, and the like registered. As shown in Fig. 6, module data 21 L of the conveyor includes 3D CAD data 30D relating to the shape and dimensions of the conveyor, and machinery setting data 30E relating to contents that can be set for a machinery, such as an operation speed (conveyance speed) and an operation direction (conveyance direction). Hereinafter, although not shown, module data 211 of feeder 54 includes 3D CAD data relating to the shape and dimensions of feeder 54 and program data relating to an operation program such as a ladder program of feeder 54. Module data 21J of camera 66 includes 3D CAD data relating to the shape and dimensions of camera 66 and characteristic data such as the viewing angle and focal length of camera 66. Further, module data 21K of light 67 (peripheral device C) includes 3D CAD data relating to the shape and dimensions of light 67, and characteristic data such as the type and illuminance of a light source such as whether the light source is a parallel light source or a point light source.

Further, as shown in Figs. 4 and 6, each module data 21 is provided with interface (I/F) 22 for mutually connecting to other module data 21 in the virtual space. Examples of types of I/F 22 include an input/output I/F (I/O_I/F) 22a shown by a circle, soft I/F 22b shown by a rectangle, mechanical I/F 22c shown by a triangle, wiring pipe I/F 22d shown by a parallelogram, and physical calculation I/F 22e shown by a pentagon. I/O_I/F 22a is used for input of on/off signals for giving an instruction of the operation or stoppage of modules, input/output of various data, and the like. Soft I/F 22b is used for input/output of various control signals such as set values of the operation speed, and the like. Mechanical I/F 22c is used for mechanical connection between modules, and the like. The wiring pipe I/F is used for connecting wiring such as a motor and connecting pipes such as air and gas. Physical calculation I/F 22e is used for input/output of values required for calculation such as a friction coefficient, a gripping force, and an operation speed, input/output of a calculation result, and the like. In the model of chuck 64 of Fig. 5, mechanical I/F 22c is used for the mechanical connection to the tip link of robot arm 62, claw 64a of chuck 64 is opened and closed by the input of the on/off control signal using I/O_I/F 22a, and the gripping state of the workpiece is determined from various values input using physical calculation I/F 22e. For example, when the pressure value supplied from physical calculation I/F 22e to chuck 64 is input, the gripping force is calculated from the area of the gripping surface of claw 64a, and whether the workpiece can be gripped is determined by comparing the gripping force with the weight of the workpiece.

Further, configuration data 30 in module data 21 is also provided with interface (I/F) 32. That is, each configuration data 30 is provided with input/output I/F (I/O_I/F) 32a, soft I/F 32b, mechanical I/F 32c, wiring pipe I/F 32d, and physical calculation I/F 32e. These I/Fs 32a to 32e have the same function as I/Fs 22a to 22e and are shown in the same figure. Further, as shown in the figure, the corresponding I/Fs of I/Fs 22a to 22e and I/Fs 32a to 32e are connected to each other. For example, in Fig. 4, I/O_I/F 22a of module data 21E is connected to I/O_I/F 32a of 3D CAD data 30A, program data 30B, and characteristic data 30C, and other corresponding I/Fs are also connected. Note that, it is assumed that corresponding address information is added to the same type of I/Fs 22 and 32, I/Fs 22 and 32 to which the address information corresponds can be connected to each other.

Computer 41 includes control section 42 having CPU, ROM, RAM, and the like, storage section 45 such as HDD that stores various application programs, various data, and the like, and communication section 46 that is connected to network 19 or the like and communicates with cloud server 11 and the like. Communication section 46 may communicate with control device 68 of work system 50 via network 19 or the like. Various instructions by an operator are input to computer 41 from input section 47 such as a keyboard or a mouse. In addition, computer 41 displays various information such as model M for a simulation, setting information, and an execution result on display section 48 such as a display. Other computers, such as computer 41B, are configured in the same manner as computer 41 and are communicably connected to cloud server 11 via network 19. Further, other computers, such as computer 41B, can also structure model M for a simulation using module data 21 to execute the simulation while receiving an input from input section 47B or displaying various information on display section 48B.

The operation of simulation system 10 thus configured will be described. First, processing when module data 21 described above is registered in cloud server 11 will be described. Fig. 7 is a flowchart showing an example of module data registration processing. This processing is executed by control section 12 of cloud server 11. In the module data registration processing, control section 12 first collects each required data, such as shape data, program data, machinery setting data, and characteristic data for each of the modules such as robot 60, board conveyance device 52, and feeder 54 that constitute work system 50 (S100). Control section 12 may collect data input from a storage medium (not shown) or the like in which data is stored, or may collect data that is generated by a device capable of executing a simulation such as computer 41 and input via network 19. Next, control section 12 groups each data acquired for each module as configuration data 30 to convert it into module data, and creates module data 21 to which I/Fs 22 and 32 are connected (S110). The connection setting of I/Fs 22 and 32 may be performed by an operator or the like using an input section, a display section, or the like (not shown). Subsequently, control section 12 assigns an identification name to created module data 21, and storing module data 21 in module DB 20 by registering the grouping from any of robot data 20A, end effector data 20B, peripheral device data 20C, and workpiece data 20D (S120), and thus the module data registration processing ends. Thus, as shown in Fig. 3, module data 21 for each module is stored in module DB 20, and each computer 41 can acquire and use module data 21 via network 19. Note that, although control section 12 collects each data and groups the data in module data 21, module data 21 already grouped may be input and stored in module DB 20.

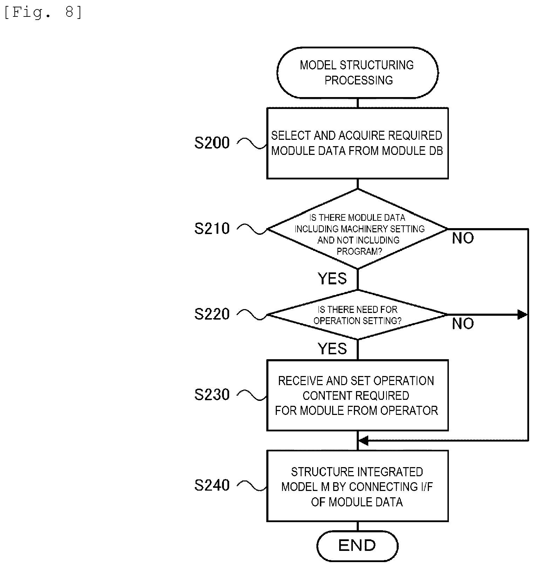

Next, processing performed when computer 41 executes the simulation will be described. Fig. 8 is a flowchart showing an example of model structuring processing. This processing is executed by control section 42 of computer 41. In the model structuring processing, control section 42 first selects module data 21 required to structure model M for the simulation from among module data 21 stored in module DB 20 and acquires module data 21 via network 19 (S200). For example, control section 42 may perform processing of S200 by displaying, on display section 48, a selection screen in which icons of module data 21 in module DB 20 are arranged to be selectable and receiving a selection of an operator using input section 47. Alternatively, control section 42 may select and automatically acquire required module data 21 based on information such as the work system, which is a simulation target, and the workpiece, which is a work target.

Subsequently, control section 42 determines whether there is module data 21 including the machinery setting data and not including the program data in acquired module data 21 (S210). When it is determined that there is such module data 21, control section 42 determines whether there is a need for operation setting (S220), and when it is determined that there is a need, control section 42 receives and sets the operation content required for module data 21 from the operator (S230). Control section 42 makes an affirmative determination in S210 if there is module data including 3D CAD data 30D and machinery setting data 30E but not including the program data, as in the case of module data 21L of the conveyor illustrated in Fig. 6. Further, for example, when the conveyor can set multiple operation speeds, control section 42 determines that there is a need for operation setting in S220, and performs processing for setting any of the operation speeds in S230. Note that, if there is data including machinery setting data but not including program data, as module data 21 of the robot, for example, control section 42 may perform processing for setting the trajectory of the robot arm in S230. When control section 42 determines that there is no module data 21 including machinery setting data and not including program data in S210, or determines that there is no need for the operation setting in S220, processing of S230 is skipped.

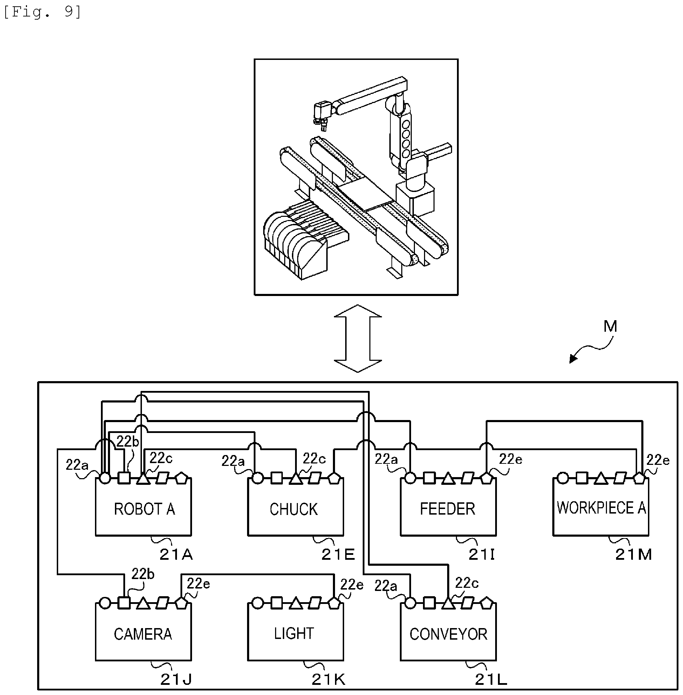

Next, control section 42 structures model M in a virtual space in which each module data 21 is integrated by connecting I/F 22 of each selected module data 21 to each other (S240), and ends the model structuring processing. In S240, control section 42 receives a selection of I/F 22, which is a connection target, by an operator using input section 47, and connects I/F 22 that has received the selection to each other to integrate module data 21. It is assumed that the structured model M is displayed on display section 48. Fig. 9 is an explanatory diagram showing an example of model M to which each module data 21 is connected, and illustrates model M of work system 50. In Fig. 9, among module data 21 stored in module DB 20, module data 21A of robot A, module data 21E of chuck 64, module data 211 of feeder 54, module data 21M of workpiece A, module data 21J of camera 66, module data 21K of light 67, and module data 21L of the conveyor are acquired and connected. In this manner, since model M can be quickly structured by acquiring and connecting module data 21 stored in cloud server 11, the simulation can be quickly started. Note that, in Fig. 9, for convenience of illustration, although the connection of wiring pipe I/F 22d is omitted, connection may be appropriately used according to the need for supply of air, electricity, and the like. In addition, control section 42 can store module data 21 once acquired and the structured model M in storage section 45. Therefore, when the same simulation is performed next time, control section 42 can promptly start the simulation by omitting processing for reacquiring module data 21 and processing for restructuring model M.

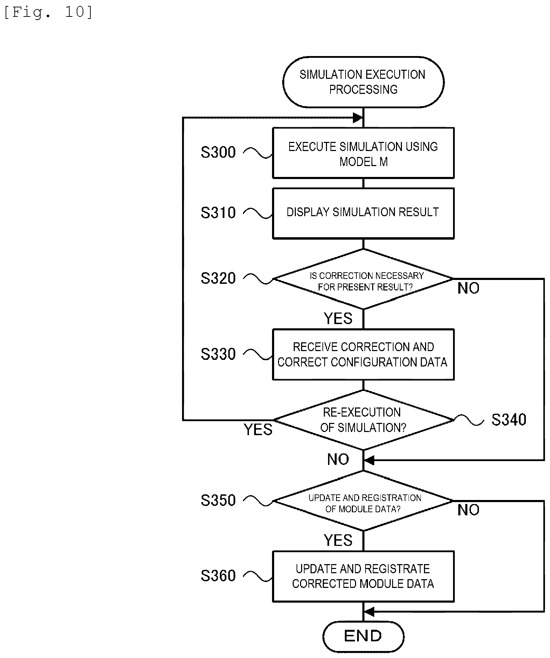

When model M is structured in this way and the execution of the simulation is instructed from the operator, control section 42 executes the simulation. Fig. 10 is a flowchart showing an example of simulation execution processing. In the simulation execution processing, control section 42 executes the simulation using the structured model M (S300), and displays the simulation result on display section 48 (S310). Then, control section 42 determines whether a correction is necessary for the present simulation result (S320). In S320, it is determined whether a correction is necessary based on an instruction from the operator who has confirmed the present simulation result. Alternatively, control section 42 may automatically determine whether a correction is necessary from the present simulation result. For example, control section 42 determines that a correction is necessary when the trajectory of robot A in model M interferes with other modules. When it is determined that a correction is necessary, control section 42 receives the correction from the operator, and corrects configuration data 30 of corresponding module data 21 (S330). Although not shown, the operation program, the operation setting, the characteristics, and the like of each module can be corrected on a correction screen displayed on display section 48. Control section 42 receives a correction performed by the operator on the correction screen, and corrects configuration data 30 based on the received correction. Therefore, the correction of the operator performed on the simulation result is reflected in configuration data 30 of each module data 21. For example, when a correction to increase the conveyance speed of the conveyor is performed by the operator, control section 42 corrects the set value of the operation setting for machinery setting data 30E of module data 21 L of the conveyor. When the area, the friction coefficient, and the like of the gripping surface of end effector A are corrected, control section 42 corrects the characteristic data which is configuration data 30 of module data 21E of end effector A. Further, when the trajectory of robot A is corrected, control section 42 corrects the program data which is configuration data 30 of module data 21A of robot A. When the operation program such as the ladder program of feeder 54 is corrected, control section 42 corrects the program data which is configuration data 30 of module data 211 of feeder 54. Note that, the operator can also give an instruction of replacement of modules (module data 21) when the correction cannot be applied due to restrictions on the shape, size, and the like. In that case, in order to change the module, control section 42 may perform processing for reacquiring module data 21 and replacing reacquired module data 21 with module data 21 in model M to restructure model M. Then, control section 42 determines whether to re-execute the simulation based on the instruction from the operator (S340), and when determination of re-execution is made, control section 42 returns to S300 and re-executes the simulation using the corrected configuration data.

Further, when it is determined in S320 that a correction is not necessary for the present simulation result, or it is determined in S340 that the simulation is not to be re-executed, control section 42 determines whether to update and register module data 21 in storage section 45 based on the instruction from the operator (S350). When it is determined that the update and registration are not to be performed, control section 42 ends the simulation execution processing. Further, when it is determined that the update and registration are to be performed, control section 42 updates and registers module data 21 including configuration data 30 that reflects the correction result of S330 (S360), and ends the simulation execution processing. Control section 42 is not limited to updating and registering module data 21 in storage section 45, and may register new module data 21 with which the correction history is associated in storage section 45. Further, control section 42 may register module data 21 associated with the correction history in module DB 20 of cloud server 11. In this way, the corrected module data 21 can be used by a third party on another computer to execute the simulation.

Here, the correspondence between the components of the present embodiment and the components of the present disclosure will be clarified. Robot 60 of the present embodiment corresponds to a robot, work system 50 corresponds to a work system, computer 41 (41B) corresponds to a computer, S200 of the model structuring processing of Fig. 8 corresponds to an acquisition step, S240 of the model structuring processing corresponds to a structuring step, and S300 of the simulation execution processing of Fig. 10 corresponds to an execution step. S330 and S360 of the model construction processing correspond to an update step. Further, control section 42 that executes S200 of the model structuring processing of Fig. 8 corresponds to an acquisition section, control section 42 that executes S240 of the model structuring processing corresponds to a structuring section, and control section 42 that executes S300 of the simulation execution processing of Fig. 10 corresponds to an execution section.

Simulation system 10 described above acquires module data 21 in which various data including 3D CAD data are grouped for each module, integrates acquired module data 21 to structure model M in a virtual space, and executes a simulation. Therefore, the preparation work can be simplified and the simulation can be executed efficiently.

Further, since configuration data 30 relating to the operation program of the module and configuration data 30 relating to the machinery setting are included in module data 21, it is not necessary to set the operation program and the machinery setting each time the simulation is executed, and the preparation work can be further simplified.

Further, since module data 21 can be easily integrated by connecting module data 21 via I/F 22, the preparation work can be further simplified.

Further, since configuration data 30 is corrected and module data 21 is updated based on the correction according to the simulation result, the simulation result can be appropriately reflected in the next and subsequent simulations, and the preparation work can be further simplified without the need to correct configuration data 30 in the preparation work for the simulation.

It is needless to say that the present invention is not limited to the above-described embodiments, and can be implemented in various aspects as long as it belongs to the technical scope of the present invention.

For example, in the above-described embodiment, module data 21 includes program data 30B, characteristic data 30C, and the like; however, the configuration is not limited to this, and any data may be used as long as shape data such as at least 3D CAD data 30A is included.

In the above-described embodiment, module data 21 are connected to each other via I/F 22; however, the configuration is not limited to this, and each module data 21 may be connected by setting whether module data 21 are connected to each other.

In the embodiment described above, configuration data 30 is corrected and module data 21 is updated and registered; however, the configuration is not limited to this, and the update and registration of module data 21 need not be performed. However, it is preferable to update module data 21 in order to appropriately reflect the correction and to save labor for the next correction.

In the embodiment described above, computer 41 stores acquired module data 21 in storage section 45; however, the configuration is not limited to this. For example, cloud server 11 may be provided with an individual work area usable by each computer 41, and each computer 41 may store acquired module data 21 in the work area to perform simulation. Further, the module data is stored in cloud server 11 and computer 41 is operated as a simulator; however, the configuration is not limited to this. For example, the application itself of the simulator may exist on cloud server 11, the simulator may be operated on cloud server 11, and computer 41 may access cloud server 11 using communication section 46 and input section 47 to use the result of the simulation.

In the embodiment described above, work system 50 composed of multiple modules including robot 60 is exemplified; however, the configuration is not limited to this, and the work system only needs to be a system composed of multiple modules and may not include robot 60.

Here, the simulation system of the present disclosure may be configured as follows. For example, in the simulation method of the present disclosure, the module data may include at least one of data relating to an operation program of the module and data relating to a machinery setting of the module, as the various data. Thus, since it is not necessary to set and register the operation program and the machinery setting each time the simulation is executed, the preparation work can be further simplified. Note that, the operation program includes a ladder program, a cycle diagram, and the like.

In the simulation method of the present disclosure, in the structuring step, in the structuring step, when the module data including the data relating to the machinery setting and not including the data relating to the operation program is acquired, a setting relating to an operation of the module may be performed as necessary. In this way, even if the module data does not include the data relating to the operation program, the simulation can be executed by performing the setting relating to the operation in addition to the data relating to the machinery setting. As the setting relating to the operation, for example, in the case of a module such as a conveyor having a pattern of multiple operation speeds, its operation speed can be set, or in the case of a module such as a robot in which the machinery setting is set, its operation trajectory can be set.

In the simulation method of the present disclosure, an interface corresponding to a function of each module may be provided in the module data, and in the structuring step, the module data may be integrated by connecting the module data to each other via the interface. In this way, since the module data can be easily integrated, the preparation work can be further simplified.

The simulation method of the present disclosure may further include an update step of updating the module data by correcting the various data included in the module data based on a correction performed on the simulation executed in the execution step. In this way, since it is possible to appropriately reflect the simulation result in the next and subsequent simulations, it is possible to further simplify the preparation work without the need to correct the data in the preparation work.

The simulation system of the present disclosure is a simulation system for executing a simulation of a work system composed of multiple modules, the simulation system including: an acquisition section configured to acquire module data in which various data including data relating to shapes of the multiple modules are grouped for each module; a structuring section configured to structure a model of the work system in a virtual space by integrating the module data acquired in the acquisition section; and an execution section configured to execute the simulation using the model structured in the structuring section.

Similar to the simulation method described above, in the simulation system of the present disclosure, it possible to quickly start a simulation by acquiring module data and structuring a model, even without performing the work of collecting or grouping the data of each module each time a simulation is executed. Therefore, the preparation work for the simulation can be simplified and the simulation can be executed efficiently. Note that, in this simulation system, a function for realizing each step of the simulation method described above may be added.

### Industrial applicability

The present invention can be applied to a manufacturing industry of a simulation system or the like.

### Reference Signs List

10 simulation system
11 cloud server
12 control section
13 module editor
15 storage section
16 communication section
19 network
20 module database (module DB)
20A robot data
20B end effector data
20C peripheral device data 20D workpiece data 21, 21A to 21P module data 22, 32 I/F 22a, 32a I/O_I/F 22b, 32b soft I/F 22c, 32c mechanical I/F 22d, 32d wiring pipe I/F 22e, 32e physical calculation I/F 30 configuration data 30A, 30D 3D CAD data 30B program data 30C characteristic data 30E machinery setting data 41, 41B computer 42 control section 45 storage section
46 communication section
47, 47B input section
48, 48B display section
50 work system
51 work table
52 board conveyance device
54 feeder
60 robot
62 robot arm
64 chuck
64a claw
65 pipe
66 camera
67 light
68 control device
M model

## Claims

1. A simulation method for executing a simulation of a work system composed of multiple modules using a computer, the simulation method comprising:
an acquisition step of acquiring module data in which various data including data relating to shapes of the multiple modules are grouped for each module;
a structuring step of structuring a model of the work system in a virtual space by integrating the module data acquired in the acquisition step; and
an execution step of executing the simulation using the model structured in the structuring step.

2. The simulation method according to claim 1, wherein the module data includes at least one of data relating to an operation program of the module and data relating to a machinery setting of the module, as the various data.

3. The simulation method according to claim 1 or 2, wherein, in the structuring step, when the module data including the data relating to the machinery setting and not including the data relating to the operation program is acquired, a setting relating to an operation of the module is performed as necessary.

4. The simulation method according to any one of claims 1 to 3, wherein an interface corresponding to a function of each module is provided in the module data, and
in the structuring step, the module data is integrated by connecting the module data to each other via the interface.

5. The simulation method according to any one of claims 1 to 4, further comprising:
an update step of updating the module data by correcting the various data included in the module data based on a correction performed on the simulation executed in the execution step.

6. A simulation system for executing a simulation of a work system composed of multiple modules, the simulation system comprising:
an acquisition section configured to acquire module data in which various data including data relating to shapes of the multiple modules are grouped for each module;
a structuring section configured to structure a model of the work system in a virtual space by integrating the module data acquired in the acquisition section; and
an execution section configured to execute the simulation using the model structured in the structuring section.
